# FASCICULE DE BREVET EUROPEEN

(11) **EP 3 758 971 B1**
(45) Date de publication et mention de la délivrance du brevet: **09.09.2026**
(21) Numéro de dépôt: 19707011.3
(22) Date de dépôt: 26.02.2019
(51) Int. Cl.: B60L 50/20, B62M 6/55, B62M 6/70, B62M 11/14, B62M 23/02, F16D 41/24, F16H 3/72

(54) **GROUPE MOTOPROPULSEUR POUR VÉHICULE À PÉDALES**
ANTRIEBSSTRANG FÜR EIN TRETFAHRZEUG
POWER TRAIN FOR A PEDAL VEHICLE

(30) Priorité: 02.03.2018 BE 201805128
(43) Date de publication de la demande: 06.01.2021
(73) Titulaire: E2 Drives SA, 1300 Wavre (BE)
(72) Inventeur: DELEVAL, Arthur, 3090 Overijse (BE)
(74) Mandataire: Gevers Patents
(86) Numéro de dépôt international: PCT/EP2019/054671
(87) Numéro de publication internationale: WO 2019/166402

(56) Documents cités:
- EP-A1- 2 218 634
- WO-A1-2016/034574
- US-A1- 2017 137 086
- US-A1- 2017 217 537
- US-A1- 2017 217 538

## Description

### Domaine technique

La présente invention concerne un groupe motopropulseur pour véhicule à pédales.

### Art antérieur

Le document JP2008-285069A divulgue un groupe motopropulseur pour un véhicule à pédales comprenant un pédalier. Ce groupe motopropulseur comprend un premier et un deuxième moteur, un plateau de sortie, un axe de pédalier et un train épicycloïdal. Le premier moteur est connecté à un planétaire du train épicycloïdal. Le deuxième moteur est connecté à un élément de sortie du train épicycloïdal. L'axe de pédalier est connecté un élément d'entrée du train épicycloïdal. Le premier moteur, le plateau de sortie, l'axe de pédalier et le train épicycloïdal tournent autour du même axe de rotation. Ce groupe motopropulseur comprend en outre une roue libre qui connecte l'élément d'entrée à l'axe de pédalier. Le plateau de sortie entraine une chaine qui entraine la roue arrière, permettant de faire avancer le véhicule à pédales.

Dans ce groupe motopropulseur connu, si les moteurs ne sont pas alimentés, le couplage ne se fait plus entre l'axe de pédalier et le plateau de sortie, empêchant ainsi de faire avancer le vélo en pédalant. Dans le cas d'un défaillance du circuit électrique ou électronique, le cycliste ne pourra plus faire avancer le vélo en pédalant afin de rentrer chez lui. En outre, dans le cas d'un démarrage ou d'un roulage en côte, le couple fourni par le cycliste est important et risque de faire glisser la transmission donnant ainsi une sensation de roulage désagréable. De plus, dans le cas d'un roulage à faible vitesse en mode non-assisté ou si la batterie est vide, un des deux moteurs va devoir fonctionner en générateur pour alimenter l'autre moteur. Une partie importante de la puissance provenant du cycliste passera par ce chemin de puissance à faible rendement rendant le pédalage particulièrement difficile.
Le document US2017/217538 décrit un contrôleur de bicyclette qui peut être monté sur une bicyclette comprenant une première transmission ayant au moins deux étages de changement de vitesse et configurée pour changer un rapport entre la rotation d'une roue et la rotation d'un pédalier, un moteur qui fournit une assistance à l'entrée de puissance humaine sur le pédalier, et une seconde transmission configurée pour transmettre une force de rotation du moteur à un chemin de transmission de puissance s'étendant du pédaler à la roue sans changer le rapport entre la rotation de la roue et la rotation du pédalier. Le document WO2016/034574 porte sur un groupe motopropulseur pour un véhicule à pédales comprenant un premier moteur et un second moteur, ainsi qu'un engrenage planétaire ayant un porte-satellites, une couronne dentée et un planétaire, le premier moteur étant relié à l'engrenage planétaire, le groupe motopropulseur comprenant également un axe de pédalier auquel est reliée la couronne dentée afin de créer une première entrée sur l'engrenage planétaire, le second moteur étant engrené avec l'axe de pédalier, une unité de commande étant conçue de façon à réguler le premier moteur en fonction d'un point de consigne de position angulaire, et le second moteur en fonction d'un point de consigne de courant ou de couple. Le document EP2218634 décrit un système de transmission pour bicyclette comprenant une entrée constituée par un axe de pédalier de bicyclette, qui est relié, en utilisation, aux pédales d'une bicyclette, et une sortie, qui est reliée, en utilisation, à un plateau de bicyclette. L'entrée et la sortie sont reliées à des arbres respectifs d'un ensemble d'engrenages épicycloïdaux à trois branches comprenant un engrenage planétaire, qui est en prise avec une pluralité d'engrenages satellites, qui sont supportés de manière rotative par un porte-satellites commun et sont en prise avec un engrenage annulaire. Les rotors des premier et second moteurs/générateurs électriques sont reliés aux arbres respectifs du jeu d'engrenages par l'intermédiaire d'engrenages multiplicateurs respectifs avec des rapports multiplicateurs d'au moins 5 et d'au moins 8, respectivement.

### Résumé de l'invention

Un premier objet de la présente invention est de fournir un groupe motopropulseur capable de fournir un bon rendement quelles que soient les conditions de fonctionnement, même sans alimentation électrique. Un deuxième objet de la présente invention est de fournir un groupe motopropulseur dont la transmission ne glisse pas, ce qui rend la conduite plus agréable.

A cet effet, l'invention propose un groupe motopropulseur pour un véhicule à pédales et comprenant:
- un axe de pédalier agencé de façon à tourner autour d'un premier axe de rotation,
- un premier plateau de sortie engrené sur une chaine ou courroie de transmission de sortie et agencé de façon à tourner autour du premier axe de rotation,
- un train épicycloïdal comprenant un élément d'entrée, un élément de sortie et un planétaire,
- un premier moteur,
- un deuxième moteur,
- une première roue libre, et
- un dispositif de réduction entre l'élément de sortie du train épicycloïdal et le premier plateau de sortie,

l'axe de pédalier étant relié au train épicycloïdal via l'élément d'entrée de façon à former une première entrée du train épicycloïdal,
le premier moteur étant relié au train épicycloïdal via le planétaire de façon à former une deuxième entrée du train épicycloïdal,
le deuxième moteur est relié à l'élément de sortie du train épicycloïdal de façon à l'entrainer selon un rapport fixe,
caractérisé en ce que
- l'élément d'entrée, l'élément de sortie et le planétaire sont agencés pour tourner autour d'un deuxième axe de rotation différent du premier axe de rotation, et
- la première roue libre est agencée pour empêcher le premier plateau de sortie de tourner moins vite que l'axe de pédalier lorsque l'axe de pédalier tourne dans le sens normal de pédalage.

L'agencement de la première roue libre, agencée pour empêcher le premier plateau de sortie de tourner moins vite que l'axe de pédalier dans le sens normal de pédalage, fait que l'axe de pédalier entraine le premier plateau de sortie lorsque la vitesse de rotation de l'axe du pédalier dépasse celle du premier plateau de sortie. Cela permet que le pédalier entraine le premier plateau de sortie lorsque la batterie est vide, lorsque les moteurs ne fonctionnent pas ou lorsque le couple fourni par le cycliste est excessif. Il y a alors un entrainement purement mécanique sans glissement entre l'axe de pédalier et le premier plateau de sortie, ce qui réduit les pertes de puissance et donc permet un haut rendement mécanique. En outre, cela diminue les efforts subis par le train épicycloïdal et les autres pièces de transmission du groupe motopropulseur en cas de couple pédalier important.

Un autre avantage de l'agencement de la première roue libre selon l'invention est qu'en cas de défaillance électrique ou électronique ne permettant plus de contrôler les moteurs, la transmission de puissance depuis le pédalier vers le plateau de sortie sera toujours possible. Le cycliste pourra donc rentrer chez lui en pédalant.

En général, le groupe motopropulseur selon l'invention permet que la transmission via la roue libre prenne le relais de la transmission via le train épicycloïdal dans certaines situations spécifiques. Cela se produit notamment quand le cycliste fournit un couple important dans le pédalier (par exemple au démarrage ou en forte montée) à cause du temps de latence dans le contrôle du premier moteur (celui relié au planétaire) et des limites de couple de celui-ci.

Le premier plateau de sortie peut également transmettre une partie de la puissance si le couple instantané sur le pédalier dépasse un certain seuil et que le premier moteur sature à son couple maximal. Pendant la durée de cette poussée sur la pédale, la valeur instantanée du rapport de vitesse du groupe motopropulseur diminue, et par exemple si le rapport de vitesse programmé est faible, il se peut que la première roue libre se mette en action et entraine le premier plateau de sortie qui transmet alors le couple excédentaire du cycliste à la chaine ou courroie de transmission de sortie. Lorsque cela se produit, ce qui peut arriver lorsque l'assistance est activée, la chaine de transmission reçoit du couple d'une part de l'élément de sortie du train épicycloïdal et d'autre part de l'axe de pédalier. La présence du premier plateau de sortie et de la première roue libre empêche ainsi le rapport de vitesse du groupe motopropulseur d'être inférieure à un. La roue libre est donc particulièrement utile en cas de route montante à forte pente afin d'éviter que la transmission ne glisse.

La première roue libre est agencée pour permettre une transmission de puissance mécanique depuis l'axe de pédalier vers le premier plateau de sortie. De préférence, la première roue libre est coaxiale au premier axe de rotation. La première roue libre est disposée, préférentiellement directement, entre l'axe de pédalier et le premier plateau de sortie. En position bloquée de la première roue libre, l'axe de pédalier entraine directement le premier plateau de sortie. En position libre de la première roue libre, le premier plateau de sortie peut tourner plus vite que l'axe de pédalier.

La première roue libre permet que le rapport de vitesse du groupe motopropulseur RVgmp soit toujours supérieur à 1.

Le dispositif de réduction entre l'élément de sortie du train épicycloïdal et le premier plateau de sortie permet que le premier plateau de sortie tourne plus lentement que l'élément de sortie du train épicycloïdal. Ce dispositif de réduction peut se trouver partiellement hors du carter du groupe motopropulseur, notamment s'il comprend un deuxième plateau de sortie.

Dans le cadre du présent document, le sens normal de pédalage est le sens de rotation de l'axe du pédalier qui correspond à un mouvement vers l'avant du véhicule à pédales. Au cause des couplages dans le groupe motopropulseur, les éléments du groupe motopropulseur ont de préférence chacun un sens de rotation qui correspond à ce sens normal de pédalage.

Dans le cadre du présent document, deux éléments connectés ou reliés peuvent être connectés ou reliés directement ou indirectement. Ils peuvent, par exemple, être engrenés directement ou indirectement via au moins une roue dentée intermédiaire, une courroie et/ou un galet.

Dans le cadre du présent document, les termes « entrée » et « sortie » doivent être compris dans le sens d'une entrée et d'une sortie dans une chaine cinématique. Une entrée est préférentiellement une entrée en puissance mécanique et une sortie est préférentiellement une sortie en puissance mécanique.

Dans le cadre du présent document, la raison du train épicycloïdal est le rapport de réduction du train épicycloïdal. Dans le cas d'un train épicycloïdal avec des satellites simples, c'est le rapport entre le diamètre de la couronne et le diamètre du planétaire. La raison du train épicycloïdal est ici de préférence comprise entre cinq et dix.

Dans le cadre du présent document, un véhicule à pédales peut par exemple être un vélo électrique un vélomoteur, un tricycle. Dans le cadre de ce document, un pedelec est un vélo électrique dont l'assistance électrique doit être coupée au-delà d'un certain seuil de vitesse du vélo.

Dans le cadre du présent document, « le rapport de vitesse du groupe motopropulseur » est définit comme étant le rapport entre la vitesse du premier plateau de sortie et la vitesse de l'axe du pédalier. Il peut aussi être appelé « paramètre de rapport de vitesses ». C'est un paramètre qui peut être commandé manuellement par le cycliste via une interface de contrôle ou calculé automatiquement par une unité de contrôle en fonction d'autres paramètres.

Dans le cadre du présent document, un élément "agencé de façon à tourner autour d'un axe de rotation" est préférentiellement un élément essentiellement symétrique autour de cet axe.

Dans le cadre du présent document, un "rapport fixe" entre deux objets signifie que le ratio de leurs vitesses de rotation est constant. Par exemple, le rotor du deuxième moteur entraine l'élément de sortie du train épicycloïdal avec un rapport fixe.

Dans le cadre du présent document, le« niveau d'assistance du groupe motopropulseur » AR désigne la portion de puissance totale récupérée à la sortie par rapport à la puissance donnée par le cycliste. Il peut être calculé comme étant la somme de la puissance de l'ensemble des deux moteurs et de la puissance du cycliste divisée par la puissance du cycliste. Il peut aussi être appelé « paramètre de niveau d'assistance ». C'est un paramètre qui peut être commandé manuellement par le cycliste via une interface de contrôle ou calculé automatiquement par l'unité de contrôle en fonction d'autres paramètres.

Dans le cadre du présent document, une mesure de position angulaire est équivalente à une mesure de vitesse angulaire. En effet, le groupe motopropulseur selon l'invention comprend préférentiellement un moyen pour déterminer la vitesse angulaire d'un des moteurs à partir de la position angulaire de ce moteur.

Dans le cadre du présent document, une mesure de courant est équivalente à une mesure de couple. En effet, le groupe motopropulseur selon l'invention comprend préférentiellement un moyen pour déterminer le couple d'un des moteurs à partir du courant fourni à ce moteur.

Il est intéressant de noter que le groupe motopropulseur a un mode de fonctionnement, qui peut être appelé « mode de fonctionnement assisté normal », dans lequel la première roue libre n'est pas bloquante, ce qui implique que l'entièreté de la puissance cycliste passe par le train épicycloïdal. Ce mode de fonctionnement est celui le plus souvent utilisé par les cyclistes utilisant un vélo électrique.

Le premier plateau de sortie est engrené directement ou indirectement sur la chaine ou courroie de transmission qui entraine, directement ou indirectement, la roue arrière du véhicule à pédale.

Le train épicycloïdal comprend une couronne, un porte-satellite et un planétaire. Le porte-satellite comprend des satellites. Le planétaire peut également être appelé planétaire intérieur ou soleil. La couronne peut également être appelée planétaire extérieur. Le planétaire et la couronne sont préférentiellement reliés via les satellites.

De préférence, le groupe motopropulseur comprend une unité de contrôle pour contrôler les deux moteurs.

Dans un mode de réalisation de l'invention, un rôle du premier moteur est de gérer le rapport de vitesse du groupe motopropulseur. Le rapport de vitesse du groupe motopropulseur RVgmp est le rapport entre la vitesse angulaire de l'axe du pédalier et la vitesse angulaire du premier plateau de sortie. Le rapport de vitesse du groupe motopropulseur peut par exemple être déterminé sur base d'un paramètre de rapport de vitesses GC (Gear Coefficient en anglais) fourni par le cycliste ou déterminé par l'unité de contrôle afin d'offrir un changement de vitesse automatique au cycliste. Cette détermination peut par exemple être réalisée par un algorithme de passage de vitesses. Le premier moteur est préférentiellement contrôlé en position angulaire ou en vitesse angulaire, par exemple via l'unité de contrôle qui contrôle le premier moteur de telle sorte qu'une consigne de position angulaire ou de vitesse angulaire soit respectée.

Dans un mode de réalisation de l'invention, un rôle du deuxième moteur est de gérer le niveau d'assistance du groupe motopropulseur. Une de ses fonctions est d'assister le mouvement du cycliste en ajoutant ou soustrayant du couple à l'élément de sortie du train épicycloïdal. Préférentiellement, un niveau d'assistance, AR, est déterminé par l'unité de contrôle sur base notamment d'un paramètre de niveau d'assistance. Le paramètre de niveau d'assistance peut être déterminé par l'utilisateur ou de façon automatique par l'unité de contrôle du groupe motopropulseur. Il est préféré que le niveau d'assistance soit indépendant du rapport de vitesse du groupe motopropulseur. Le deuxième moteur est préférentiellement contrôlé en courant ou en couple, par exemple via l'unité de contrôle qui contrôle le deuxième moteur de telle sorte qu'une consigne de courant ou de couple soit respectée.

Préférentiellement, l'unité de contrôle est connectée électriquement à un élément de mesure d'une position angulaire du premier moteur, à un élément de mesure d'une position angulaire du deuxième moteur, à un élément de mesure d'un courant du premier moteur, et à un élément de mesure d'un courant du deuxième moteur.

Il est intéressant de noter qu'il n'y a pas de différence fondamentale entre un contrôle en position et un contrôle en vitesse car il existe un lien mathématique direct entre les deux valeurs. La vitesse angulaire est la dérivée temporelle de la position angulaire. Par exemple, contrôler un moteur pour qu'il tourne à une vitesse angulaire constante revient à contrôler un moteur pour qu'il suive une position angulaire évoluant linéairement en fonction du temps.

De préférence, l'élément d'entrée est un porte-satellite du train épicycloïdal et l'élément de sortie est une couronne du train épicycloïdal.

Le contrôle des premier et deuxième moteurs peut par exemple être réalisé de la façon suivante.

La vitesse angulaire de la roue arrière du vélo *ω_{R}* est proportionnelle à la vitesse angulaire du premier plateau de sortie *ωₚₗₐₜ* : ${ω}_{R} = {R}_{R} ⋅ {ω}_{plat}$ Avec *R_{R}* le rapport de transmission entre la vitesse angulaire de la roue arrière du vélo et la vitesse angulaire du premier plateau de sortie.

En utilisant l'équation de vitesse du train épicycloïdal, on peut obtenir la vitesse angulaire du premier plateau de sortie qui est donnée par ${ω}_{plat} = \frac{1}{{R}_{out}} \left(\frac{{R}_{C} ⋅ \left(R+1\right) ⋅ {ω}_{ped} - {ω}_{M 1}}{R}\right)$ Où *Rₒᵤₜ* est le rapport de réduction entre la couronne et le premier plateau de sortie, *R_{C}* est le rapport de démultiplication entre l'axe de pédalier et le porte-satellite, *ω*_{*M*1} est la vitesse angulaire du premier moteur, *ω_{ped}* est la vitesse angulaire du pédalier et R est la raison du train épicycloïdal.

Ce résultat indique que la vitesse du premier plateau de sortie est une somme pondérée de la vitesse de l'axe de pédalier et de celle du premier moteur. Il montre également qu'il est possible de changer continuellement le rapport de vitesse du groupe motopropulseur en faisant varier la vitesse du premier moteur.

La vitesse angulaire de l'axe du pédalier peut être déterminée à partir de la vitesse angulaire mesurée du premier moteur ${ω}_{M 1}^{mes}$ et du deuxième moteur ${ω}_{M 2}^{mes}$ par ${ω}_{ped} = \frac{\frac{R . {ω}_{M 2}^{mes}}{{R}_{M 2}} + {ω}_{M 1}^{mes}}{\left(R+1\right) . {R}_{C}}$ Où *R*_{*M*2} est le rapport de réduction entre le deuxième moteur et la couronne. *R*_{*M*2} est de préférence compris entre 5 et 15.

La vitesse angulaire du pédalier peut également être mesurée par un capteur de position mesurant la position de l'axe du pédalier.

L'unité de contrôle peut se baser sur un paramètre de rapport de vitesse *GC* (pour Gear Coefficient en anglais) et sur la vitesse angulaire mesurée du pédalier pour déterminer la consigne de vitesse angulaire imposée au premier moteur ${ω}_{M 1}^{cons}$ ${ω}_{M 1}^{cons} = - GC . Rc . {ω}_{ped}$

Le paramètre GC peut soit être négatif, soit positif. Si le paramètre GC est négatif, le premier moteur fonctionne en générateur pour alimenter en tout ou en partie le deuxième moteur. Si le paramètre GC est positif, le premier moteur fonctionne en moteur.

Il est aussi possible de contrôler le premier moteur en position angulaire en lui assignant une consigne de position angulaire valant simplement l'intégrale de cette consigne de vitesse ${ω}_{M 1}^{cons}$.

En combinant les équations précédentes, on obtient l'expression du rapport de vitesse du groupe motopropulseur *RVgmp:* $RV gmp = \frac{{ω}_{plat}}{{ω}_{ped}} = \frac{{R}_{C}}{{R}_{out}} . \left(\frac{GC + R + 1}{R}\right)$

Cette expression donne le lien entre le paramètre GC et le rapport de vitesse du groupe motopropulseur *RVgmp.* Quand GC est constant, le rapport de vitesse de vitesse du groupe motopropulseur est constant. Plus le paramètre GC est élevé, plus le rapport de vitesse du groupe motopropulseur *RV gmp* est élevé.

Quand la première roue libre est bloquante, la vitesse du premier plateau de sortie *ωₚₗₐₜ* est égale à la vitesse du pédalier *ω_{ped},* et le rapport de vitesse du groupe motopropulseur RVgmp vaut 1. C'est la valeur minimale de RVgmp. Le plus petit paramètre de rapport de vitesse GCₘᵢₙ du groupe motopropulseur est déterminé par l'emplacement de cette roue libre et des valeurs de dimensionnement R_{c}, *Rₒᵤₜ* et R. Il vaut alors ${GC}_{min} = \frac{R . {R}_{out}}{{R}_{c}} - \left(R+1\right)$

Le groupe motopropulseur selon l'invention permet donc, en fonction du choix des valeurs de R_{c}, Rₒᵤₜ et R, d'obtenir un *GCₘᵢₙ* négatif, ce qui permet que le premier moteur fonctionne en générateur.

Dans un exemple de réalisation de l'invention, R est égal à 8, Rₒᵤₜ est égal à 1,8 et R_{c} est égal à 2,7.

L'équation de couple du train épicycloïdal donne cette expression : ${C}_{M 1} = \frac{{C}_{cour}}{R} = \frac{{C}_{PS}}{\left(R+1\right)}$ Où *C*_{*M*1} est le couple du premier moteur, *C_{cour}* est le couple de la couronne et *C_{PS}* est le couple du porte-satellite.

Le couple du premier moteur *C*_{*M*1} est donc donné par ${C}_{M 1} = \frac{{C}_{ped}}{R . {R}_{c}} = \frac{{C}_{plat}}{\left(R+1\right) . {R}_{out}}$ Où *C_{ped}* est le couple du pédalier et *Cₚₗₐₜ* est le couple du premier plateau de sortie.

On a donc ${C}_{ped} = \left(R+1\right) . {R}_{c} . {C}_{M 1}$ Il est ainsi possible de calculer le couple du pédalier *C_{ped}* à partir du couple mesuré sur le premier moteur *C*_{*M*1}*.* Il n'est donc pas nécessaire d'utiliser un capteur de couple comme c'est le cas dans d'autres groupes motopropulseurs pour véhicule à pédales.

On peut considérer un paramètre de niveau d'assistance AR (pour Assistance Ratio en anglais), par exemple égal au rapport de la puissance totale fournie à la roue sur la puissance fournie par le cycliste Pc. Pour que le groupe motopropulseur assiste le cycliste, le paramètre AR doit donc être supérieur à 1. Le paramètre AR peut, par exemple, être mis à 1 quand le cycliste décide de couper son assistance électrique. $AR = \frac{Pout}{Pc} = \frac{{P}_{M 1} + {P}_{M 2} + Pc}{Pc}$

En prenant en compte que la puissance vaut le couple multiplié par la vitesse angulaire, il est possible de déterminer le couple du deuxième moteur qui est adéquat pour atteindre le paramètre de niveau d'assistance désiré, sur base du couple du premier moteur *C*_{*M*1}, par l'équation $\begin{matrix}AR = \frac{\left(GC+R+1\right)}{\left(R+1\right)} . \left(1+\frac{{R}_{M 2} . {C}_{M 2}}{R . {C}_{M 1}}\right) \\ = > {C}_{M 2}^{cons} = {C}_{M 1}^{mes} ⋅ \frac{R}{{R}_{M 2}} ⋅ \left(\frac{AR . \left(R+1\right)}{\left(GC+R+1\right)}-1\right)\end{matrix}$ ${C}_{M 2}^{cons}$ est donc une consigne de couple ou de courant imposée au deuxième moteur.

En fonction des valeurs de AR et GC, la consigne de couple du deuxième moteur sera soit positive (fonctionnement en moteur), soit négative (fonctionnement en générateur). La consigne de couple du deuxième moteur sera par exemple négative quand le cycliste décide de pédaler à plus de 25 km/h si le groupe motopropulseur est installé sur un pedelec. En effet, la loi européenne impose une coupure de l'assistance au-delà de 25 km/h pour ce type de véhicule.

Un développement équivalent peut être écrit pour un mode de réalisation de l'invention où l'élément d'entrée est une couronne du train épicycloïdal et l'élément de sortie est un porte-satellite du train épicycloïdal. Les conclusions en seront similaires.

Dans un mode de réalisation de l'invention, le groupe motopropulseur est agencé de façon à satisfaire à l'inégalité suivante : ${GC}_{min} = \frac{R . {R}_{out}}{{R}_{c}} - \left(R+1\right) < 0$ où :
- *R* est la raison du train épicycloïdal,
- *Rₒᵤₜ* est le rapport de réduction entre l'élément de sortie et le premier plateau de sortie, et
- *R_{C}* est le rapport de démultiplication entre l'axe de pédalier et l'élément d'entrée.

Cela permet de faire fonctionner le premier moteur en générateur.

Dans un mode de réalisation de l'invention, au moins un des deux moteurs est un moteur à aimants permanents intérieurs.

Un moteur à aimants permanents intérieurs (IPM motor en anglais) est un moteur dans lequel les aimants sont à l'intérieur d'un matériau ferromagnétique. Un tel moteur a typiquement un bon rendement sur une large plage de vitesse de rotation, ce qui permet de l'utiliser, en particulier comme deuxième moteur connecté à la sortie, tout en maintenant une large plage en vitesse de rotation.

Dans un mode de réalisation de l'invention, le groupe motopropulseur comprend un système démultiplication de vitesse entre l'axe de pédalier et l'élément d'entrée du train épicycloïdal, de manière à ce que l'élément d'entrée tourne plus vite que l'axe de pédalier.

Dans un mode de réalisation de l'invention, le système de démultiplication de vitesse comprend un élément de transmission déformable, par exemple une courroie de démultiplication, qui est de préférence crantée.

Dans un mode de réalisation de l'invention, le dispositif de réduction entre l'élément de sortie du train épicycloïdal et le premier plateau de sortie comprend un deuxième plateau de sortie engrené sur la chaine ou courroie de transmission de sortie.

Ainsi, l'élément de sortie du train épicycloïdal entraine le deuxième plateau de sortie qui entraine la chaine ou courroie de transmission de sortie. La chaine ou courroie de transmission de sortie entraine le premier plateau de sortie.

Le deuxième plateau de sortie permet d'entrainer, de préférence directement, la chaine ou courroie de transmission de sortie. Cela permet un assemblage particulièrement aisé du groupe motopropulseur, et le rend particulièrement léger et peu volumineux. De plus, cela diminue le nombre de pièces et donc le cout de fabrication. Cela permet aussi d'obtenir un rendement de transmission du groupe motopropulseur particulièrement élevé.

Ce deuxième plateau de sortie est de préférence solidaire de l'élément de sortie du train épicycloïdal. Ce deuxième plateau de sortie est de préférence d'un diamètre inférieur au premier plateau de sortie.

Dans un mode de réalisation de l'invention, le groupe motopropulseur comprend une deuxième roue libre placée entre l'axe de pédalier et l'élément d'entrée du train épicycloïdal de manière à ce que l'axe de pédalier entraine l'élément d'entrée quand l'axe de pédalier tourne dans le sens normal de pédalage et de manière à empêcher que l'axe de pédalier entraine l'élément d'entrée quand le l'axe de pédalier tourne dans un sens inverse au sens normal de pédalage.

Dans un mode de réalisation de l'invention, le premier moteur est agencé pour être contrôlé en vitesse ou en position et le deuxième moteur est agencé pour être contrôlé en couple ou en courant

Dans un mode de réalisation de l'invention, le premier moteur est agencé pour être contrôlé en vitesse ou en position grâce à une consigne de vitesse qui est déterminée sur base d'une vitesse mesurée de l'élément d'entrée du train épicycloïdal et d'un paramètre (GC) de rapport de vitesse du groupe motopropulseur.

Dans un mode de réalisation de l'invention, le deuxième moteur est agencé pour être contrôlé en en couple ou en courant grâce à une consigne de couple qui est déterminée sur base d'au moins un couple ou d'un courant mesuré sur le premier moteur et d'un paramètre (AR) de niveau d'assistance.

Dans un mode de réalisation de l'invention, le deuxième moteur est agencé pour être contrôlé en en couple ou en courant grâce à une consigne de couple qui est proportionnelle au résultat d'un filtrage et/ou d'un décalage temporel d'un courant mesuré sur le premier moteur.

En effet, au lieu d'utiliser le courant mesuré instantané ${C}_{M 1}^{mes}$, il peut être préférable d'utiliser un signal filtré et/ou décalé du courant mesuré ${C}_{M 1}^{mes}$ afin de calculer la consigne de courant ${C}_{M 2}^{cons}$ du deuxième moteur. Cette technique pourrait, par exemple, être utilisée quand les deux moteurs fonctionnent en moteur et qu'on veut lisser l'assistance sur un tour de pédalier, et donc également lisser la puissance provenant de la batterie.

Dans un mode de réalisation de l'invention, le premier moteur est agencé pour être contrôlé en vitesse ou en position grâce à une consigne de vitesse qui est déterminée sur base d'une vitesse de l'élément d'entrée du train épicycloïdal et cette vitesse est déterminée sur base d'une vitesse mesurée du premier moteur et d'une vitesse mesurée du deuxième moteur.

Dans un mode de réalisation de l'invention, le groupe motopropulseur est agencé pour qu'au moins un des premier et deuxième moteurs puisse fonctionner sans que l'axe de pédalier ne soit actionné.

Cela permet de faire avancer le vélo même quand l'axe de pédalier est à l'arrêt. Cela peut se faire par exemple par une commande sur le guidon. Dans une telle situation, il peut y avoir une motorisation sans pédalage, par exemple au moins le deuxième moteur peut fonctionner. De préférence, dans cette situation, le premier moteur n'est pas piloté en vitesse.

Dans un mode de réalisation de l'invention, le groupe motopropulseur est agencé pour qu'au moins un des deux moteurs puisse fonctionner en générateur en étant entrainé par la chaine ou courroie de transmission de sortie via le premier plateau de sortie et le train épicycloïdal.

Cela permet de freiner de manière électromagnétique le véhicule et ainsi recharger la batterie. L'unité de contrôle est de préférence agencée pour piloter au moins un des deux moteurs en générateur. Le cycliste peut indiquer qu'il désire actionner ce freinage avec recharge de batterie par exemple via une commande sur le guidon ou via un rétropédalage. De préférence, dans cette situation, le premier moteur n'est pas piloté en vitesse.

L'invention propose en outre un système, par exemple un véhicule à pédales, comprenant un groupe motopropulseur selon un mode de réalisation de l'invention et une chaine ou courroie de transmission de sortie.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre une coupe schématique d'un groupe motopropulseur possible selon un premier mode de réalisation de l'invention;
- la figure 2 montre deux graphes représentant des exemples de rapport de la puissance du premier moteur sur la puissance du cycliste versus le paramètre de rapport de vitesse GC;
- la figure 3 illustre une coupe schématique d'un groupe motopropulseur possible selon un deuxième mode de réalisation de l'invention; et
- la figure 4 illustre une vue latérale d'un groupe motopropulseur possible selon le deuxième mode de réalisation de l'invention et de la transmission vers une roue arrière du véhicule à pédale.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

La description ci-dessous présente quatre modes de réalisation principaux de l'invention qui sont purement illustratifs, et l'homme du métier comprendra qu'il en existe de nombreux autres. Dans chacun des modes de réalisation de l'invention, le groupe motopropulseur 1 comprend un axe de pédalier 2 et un premier plateau de sortie 4 de même axe de rotation et un train épicycloïdal comprenant un élément d'entrée, un planétaire 5 et un élément de sortie.

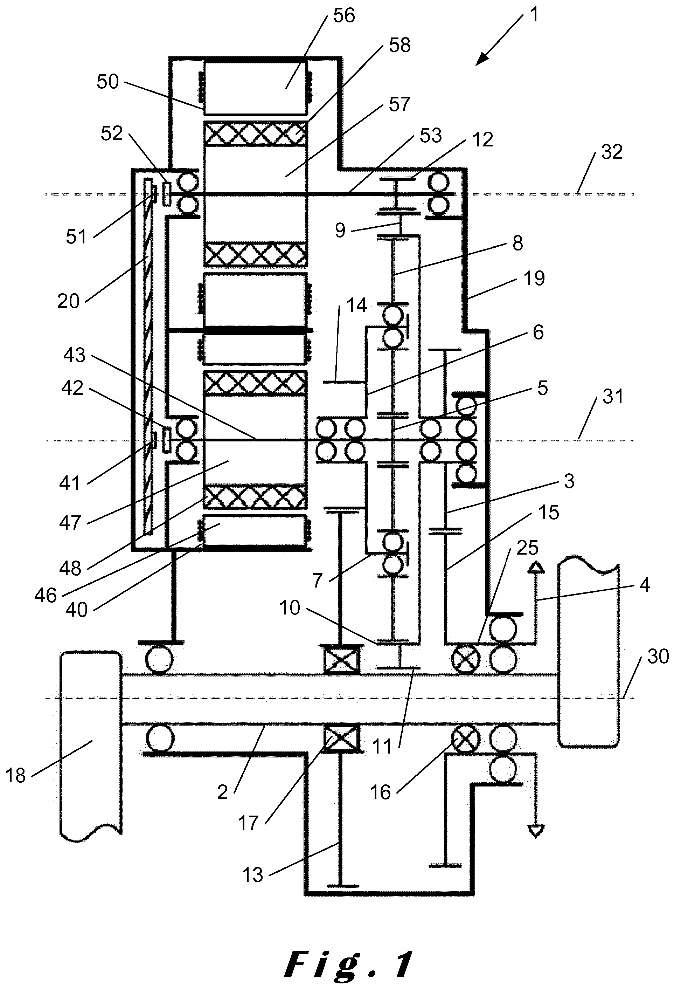

Dans un premier mode de réalisation de l'invention (illustré à la figure 1), l'axe de pédalier 2 est relié à l'élément d'entrée par un premier engrenage qui inverse le sens de rotation et l'élément de sortie est relié au premier plateau de sortie par un dispositif de réduction comprenant un deuxième engrenage qui inverse aussi le sens de rotation.

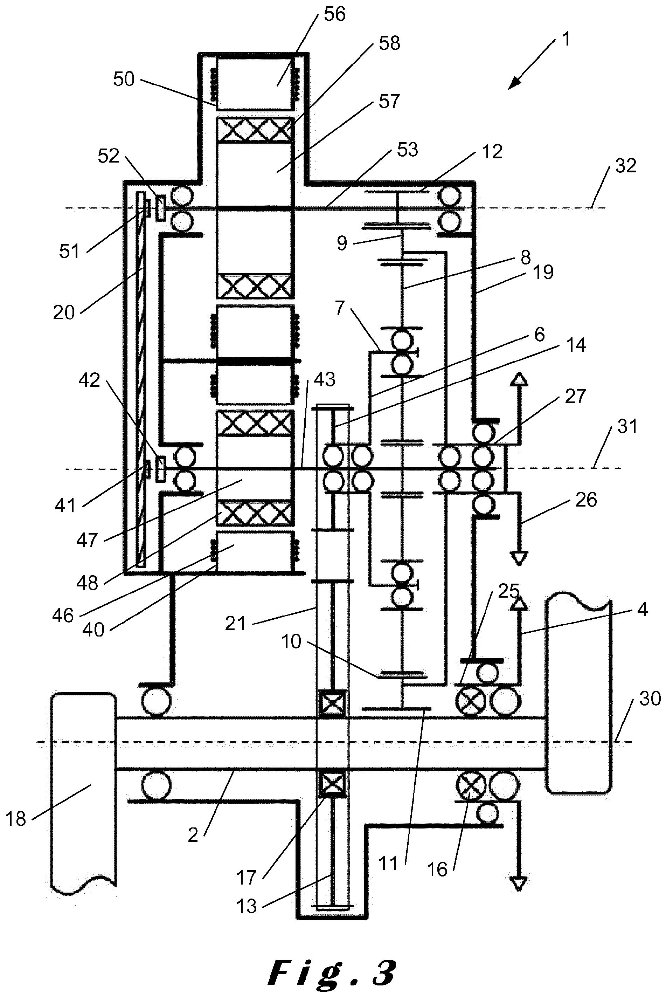

Dans un deuxième mode de réalisation de l'invention (illustré à la figure 3), l'axe de pédalier 2 est relié à l'élément d'entrée par un système de transmission conservant le sens de rotation et l'élément de sortie est relié au premier plateau de sortie par un dispositif de réduction comprenant un deuxième plateau de sortie solidaire de l'élément de sortie et qui garde aussi le sens de rotation. Ce deuxième plateau de sortie est engrené sur la chaine ou courroie de transmission de sortie.

Dans un troisième mode de réalisation de l'invention (non-illustré), l'axe de pédalier 2 est relié à l'élément d'entrée par un premier système de transmission conservant le sens de rotation et l'élément de sortie est relié au premier plateau de sortie par une courroie qui conserve aussi le sens de rotation. De préférence, le groupe motopropulseur selon ce troisième mode de réalisation de l'invention ne comprend pas de deuxième plateau de sortie..

Dans un quatrième mode de réalisation de l'invention (non-illustré), l'axe de pédalier 2 est relié à l'élément d'entrée par un premier engrenage qui inverse le sens de rotation et l'élément de sortie est relié au premier plateau de sortie par un dispositif de réduction comprenant un deuxième engrenage entrainant un deuxième plateau de sortie et qui inverse aussi le sens de rotation.

Il est intéressant de noter que chaque mode de réalisation de l'invention est possible en considérant que l'élément d'entrée est le porte-satellite et l'élément de sortie est la couronne, ou en considérant que l'élément d'entrée est la couronne et l'élément de sortie est le porte-satellite.

La figure 1 illustre un groupe motopropulseur 1 qui est possible selon un premier mode de réalisation de l'invention. Le groupe motopropulseur 1 comprend un axe de pédalier 2 et un premier plateau de sortie 4 de même axe de rotation. Cet axe peut être appelé premier axe de rotation 30. Le premier plateau de sortie 4 est fixé de manière solidaire à un arbre creux 25, qui est monté sur roulement sur l'axe de pédalier 2. Préférentiellement, l'axe de pédalier 2 est fixé à deux manivelles 18. Préférentiellement, le groupe motopropulseur 1 comprend un carter 19.

Une première roue libre 16 est placée entre l'axe de pédalier 2 et l'arbre creux 25 de manière à empêcher le premier plateau de sortie 4 de tourner moins vite que l'axe de pédalier 2 quand l'axe de pédalier 2 est actionné dans le sens normal de pédalage (de manière à faire avancer le vélo). Le premier plateau de sortie 4 est donc libre de tourner plus vite que l'axe de pédalier 2 dans le sens normal de pédalage.

Le groupe motopropulseur 1 comprend un train épicycloïdal agencé pour tourner autour d'un deuxième axe de rotation 31. Le train épicycloïdal comprend un planétaire 5, un porte-satellite 6 et une couronne 9. Le porte-satellite 6 comprend au moins un satellite 8. Le ou les satellites 8 sont arrangés pour tourner autour d'axes 7 du porte-satellite 6. Le ou les satellites 8 sont engrenés avec d'une part le planétaire 5 et d'autre part la couronne 9.

La couronne 9 comprend de préférence une denture interne 10 engrenée avec le ou les satellites 8. La couronne 9 comprend également une denture externe 11 engrenée avec le pignon 12 du deuxième moteur 50.

Le groupe motopropulseur 1 comprend un premier moteur 40 et un deuxième moteur 50. Le premier moteur 40 comprend un stator 46 et un rotor 47 qui comprend préférentiellement des aimants 48. Le rotor 47 est agencé pour tourner autour du deuxième axe de rotation 31. Le couple du rotor 47 est transmis par un arbre 43 du rotor 47 au planétaire 5. Le deuxième moteur 50 comprend un stator 56 et un rotor 57 qui comprend préférentiellement des aimants 58. Le rotor 57 est agencé pour tourner autour d'un troisième axe de rotation 32. Le couple du rotor 57 est préférentiellement transmis par un arbre 53 du rotor 57 à un pignon 12.

Préférentiellement, un premier aimant de mesure 42 est fixé à une extrémité de l'arbre 43 du premier moteur 40 et un deuxième aimant de mesure 52 est fixé à une extrémité de l'arbre 53 du deuxième moteur 50.

Le groupe motopropulseur 1 comprend de préférence une unité de contrôle, de préférence un microcontrôleur. Par exemple, le groupe motopropulseur 1 peut comprendre une carte électronique 20, connectée au premier moteur 40 et au deuxième moteur 50 et contenant l'unité de contrôle (non représentée sur les figures).

Le groupe motopropulseur 1 comprend préférentiellement un élément de mesure de courant du premier moteur 40 et un élément de mesure de courant du deuxième moteur 50.

Préférentiellement, un premier capteur 41 est fixé à la carte électronique 20, approximativement dans l'axe du deuxième axe de rotation 31. Le premier capteur 41 et le premier aimant de mesure 42 font partie d'un élément de mesure de position angulaire du rotor 47 du premier moteur 40.

Préférentiellement, un deuxième capteur 51 est fixé à la carte de circuit imprimé 20, approximativement dans l'axe du troisième axe de rotation 32. Le deuxième capteur 51 et le deuxième aimant de mesure 52 font partie d'un élément de mesure de position angulaire du rotor 57 du deuxième moteur 50.

Le pignon 12 est de préférence solidaire du rotor 57 du deuxième moteur 50, de façon à tourner avec ce rotor 57. Le pignon 12 est engrené, préférentiellement directement, sur une denture externe 11 de la couronne 9. Le pignon 12 a un diamètre inférieur à celui de la couronne 9, le but étant de diminuer la vitesse de rotation par rapport à celle du moteur.

De préférence, le planétaire 5 est solidaire du rotor 47 du premier moteur 40 de façon à tourner avec ce rotor 47.

De préférence, le groupe motopropulseur 1 comprend d'un système de démultiplication de vitesse entre l'axe de pédalier 2 et l'élément d'entrée du train épicycloïdal. Ce système de démultiplication de vitesse peut par exemple comprendre une première roue d'entrée 13 entrainée par de l'axe de pédalier 2 quand l'axe de pédalier 2 est actionné dans son sens normal de pédalage. La première roue d'entrée 13 entraine une deuxième roue d'entrée 14. La deuxième roue d'entrée 14 entraine le porte-satellite 6, qui est l'élément d'entrée du train épicycloïdal dans le mode de réalisation de l'invention illustré à la figure 1. La première roue d'entrée 13 est de préférence solidaire de l'axe de pédalier 2 ou connectée à l'axe de pédalier par le biais d'une deuxième roue libre 17 optionnelle. De préférence, la deuxième roue d'entrée 14 est solidaire du porte-satellite 6. La première roue d'entrée 13 a un diamètre plus grand que la deuxième roue d'entrée 14.

La présence de la deuxième roue libre 17 permet une plus grande flexibilité de contrôle du groupe motopropulseur 1 car, grâce à elle, le deuxième moteur 50 peut tourner dans son sens normal de fonctionnement sans actionner l'axe de pédalier 2. Cela permet, par exemple, d'utiliser la motorisation, en alimentant au moins un des deux moteurs 40, 50, à l'aide d'une commande au guidon par exemple, sans que le cycliste n'actionne le pédalier. Ainsi, le véhicule à pédale peut avancer sans rotation de l'axe de pédalier 2. Il est intéressant de noter que le contrôle des moteurs dans ce mode de fonctionnement spécifique peut être différent du contrôle des moteurs quand l'axe de pédalier 2 est actionné.

La puissance issue de la combinaison des puissances du premier moteur 40, du deuxième moteur 50 et du cycliste est, de préférence, transférée au premier plateau de sortie 4 par le biais d'un dispositif de réduction de vitesse. Le dispositif de réduction illustré à la figure 1 comprend une première roue de sortie 3, solidaire de la couronne 9 et une deuxième roue de sortie 15. La première roue de sortie 3 entraine la deuxième roue de sortie 15, elle-même solidaire de l'arbre creux de sortie 25 et du plateau du premier plateau de sortie 4. La première roue de sortie 3 a un diamètre plus petit que la deuxième roue de sortie 15.

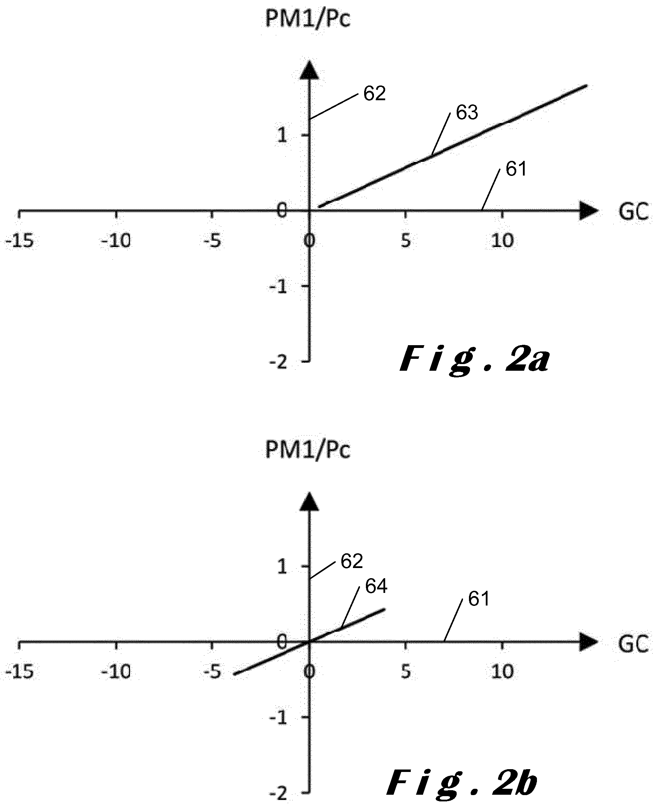

La figure 2 montre deux graphes représentant un exemple de rapport de la puissance du premier moteur sur la puissance du cycliste 62 versus le paramètre de rapport de vitesse GC 61. La plage de rapport de vitesse du groupe motopropulseur est la même pour ces deux graphes. Le plage de rapport de vitesse peut être définie comme le ratio du rapport de vitesse maximal du groupe motopropulseur sur le rapport de vitesse minimal du groupe motopropulseur.

La figure 2a est un exemple d'un tel graphe 63 dans un mode de réalisation du groupe motopropulseur selon l'invention où la raison du train épicycloïdal, le rapport de réduction entre l'élément de sortie et le premier plateau de sortie 4 et le rapport de démultiplication entre l'axe de pédalier 2 et l'élément d'entrée sont choisis tel que GCₘᵢₙ soit positif : ${GC}_{min} = \frac{R . {R}_{out}}{{R}_{c}} - \left(R+1\right) \geq 0$

Dans ce cas, le premier moteur 40 tourne uniquement dans le sens de rotation correspondant à un fonctionnement en moteur, c'est-à-dire avec un GC pouvant évoluer dans la zone positive.

La figure 2b est un exemple d'un tel graphe 64 dans un mode de réalisation du groupe motopropulseur selon l'invention où la raison du train épicycloïdal, le rapport de réduction entre l'élément de sortie et le premier plateau de sortie 4 et le rapport de démultiplication entre l'axe de pédalier 2 et l'élément d'entrée sont choisis pour que tel que GCₘᵢₙ soit négatif : ${GC}_{min} = \frac{R . {R}_{out}}{{R}_{c}} - \left(R+1\right) < 0$

Dans ce cas, le premier moteur 40 peut tourner dans les deux sens de rotation, pouvant ainsi fonctionner en moteur ou générateur, c'est-à-dire avec un GC pouvant évoluer dans la zone négative et positive.

Il est à noter que le rapport entre la puissance fournie par le premier moteur et la puissance fournie par le cycliste P_{M1}/P_{c} est indépendant du niveau d'assistance AR. Ainsi quand AR vaut 1 (AR = Pout/Pc), cela veut dire que la puissance à la sortie du groupe motopropulseur est égale à la puissance fournie par le cycliste, autrement dit le cycliste n'est pas assisté. Dans ce cas, la puissance mécanique fournie par un moteur doit être freinée par l'autre moteur.. Dans ce mode de fonctionnement, un moteur fonctionne en générateur pour alimenter l'autre moteur. On peut dire qu'il y a donc un transfert de puissance entre les deux moteurs. Ce mode non-assisté, où AR vaut 1, est forcé par l'unité de contrôle au-delà de 25 km/h pour les pedelecs.

Ce fonctionnement occasionne des pertes importantes qui sont égales au produit du rendement du premier moteur par le rendement du deuxième. Il est donc intéressant de minimiser la partie de puissance provenant du cycliste qui empreinte ce chemin de puissance à bas rendement (appelée « puissance de transfert entre moteurs »). Cette puissance de transfert entre moteur est en fait égale au ratio « P_{M1}/P_{c} », qui est l'ordonnée des graphes de la figure 2. Ainsi, la quantité de transfert de puissance entre moteurs sera plus faible dans le cas de la figure 2b.

Par conséquent, la comparaison entre les figures 2a et 2b montre que la situation de la figure 2b est préférable au niveau du rendement en mode non-assisté que la situation de la figure 2a.

Une réduction du rapport P_{M1}/P_{C} a aussi comme avantage de pouvoir réduire la taille du premier moteur 40, et ainsi réduire le poids et la taille du groupe motopropulseur.

Il est intéressant de noter que la possibilité de faire tourner le premier moteur en générateur est lié à l'emplacement de la première roue libre, ainsi qu'au dispositif de réduction entre l'élément de sortie du train épicycloïdal le premier plateau de sortie et au décalage entre le premier et le deuxième axe de rotation. En effet, cet agencement du groupe motopropulseur permet que *Rₒᵤₜ* soit différent de 1 et que *R_{c}* soit potentiellement différent de 1, ce qui permet d'obtenir n'importe quelle valeur de *GCₘᵢₙ* négative tout en ayant un système de blocage purement mécanique du plus petit rapport de vitesse du groupe motopropulseur.

La figure 3 illustre un groupe motopropulseur 1 selon un deuxième mode de réalisation de l'invention. Dans le deuxième mode de réalisation de l'invention, le système de transmission entre l'axe de pédalier 2 et l'élément d'entrée du train épicycloïdal conserve le sens de rotation. Il comprend préférentiellement une courroie crantée 21.

Le système de transmission conservant le sens de rotation peut être par exemple un élément de transmission déformable, un double étage d'engrenage ou un engrenage où l'une des roues dentées a une denture interne car, dans chacun de ces systèmes de transmission, le sens de rotation d'entrée est identique au sens de rotation de sortie.

La transmission par élément de transmission déformable, contrairement à la transmission par engrenage, laisse le choix de l'entraxe entre les éléments en rotation à ses deux extrémités. Cela donne beaucoup de liberté de conception. Cela permet aussi d'obtenir un grand rapport de démultiplication entre l'axe de pédalier et la première entrée du train épicycloïdal sans augmenter la taille du système. Ce grand rapport de démultiplication permet de sous-dimensionner le train épicycloïdal, ce qui diminue le poids du groupe motopropulseur. Il permet également de réduire la taille des moteurs électriques. Cela permet donc d'augmenter le rapport de démultiplication entre l'axe du pédalier et le premier élément d'entrée sans augmenter la taille du groupe motopropulseur.

En outre, l'utilisation d'un élément de transmission déformable pour démultiplier la vitesse de l'axe du pédalier jusqu'à la première entrée du train épicycloïdal permet d'obtenir un écart particulièrement grand entre l'axe de pédalier et l'axe du train épicycloïdal. Il est ainsi possible d'augmenter la taille de la couronne du train épicycloïdal pour en augmenter sa raison. Le but d'augmenter la raison du train épicycloïdal et d'augmenter la vitesse des deux moteurs électriques et d'ainsi diminuer la taille de ces moteurs. Cela réduit le poids et le volume du groupe motopropulseur. De cette manière, il est possible de réduire le diamètre des deux moteurs électriques, ce qui permet de les positionner tous les deux du même côté du groupe motopropulseur.

L'utilisation d'un système de transmission par courroie permet d'isoler le pédalier des vibrations pouvant venir des moteurs électriques ou de la transmission. Elle amortit ainsi les vibrations ressenties par le cycliste dans les pieds, améliorant ainsi son confort.

Dans le deuxième mode de réalisation de l'invention, le groupe motopropulseur 1 contient deux plateaux de sortie engrenés sur la même chaine ou courroie 23 de transmission à la roue arrière du véhicule. Le premier plateau de sortie 4 est centré sur le premier axe de rotation 30 et un deuxième plateau 26 est centré sur le deuxième axe de rotation 31. La première roue libre 16 est placée entre l'axe de pédalier 2 et le premier plateau de sortie 4 et empêche ce dernier de tourner moins vite que l'axe de pédalier 2 quand le pédalier est actionné dans le sens normal de pédalage.

Le premier plateau de sortie 4, tournant autour d'un autre axe que le deuxième plateau de sortie 26, permet de guider la chaine ou courroie de transmission de sortie autour de l'axe du pédalier 2 afin d'écarter le brin inférieur et le brin supérieur de la chaine. De préférence, le premier et deuxième plateaux de sortie sont situés à l'extérieur d'un carter du groupe motopropulseur.

En mode de fonctionnement assisté normal, le groupe motopropulseur 1 selon le deuxième mode de réalisation de l'invention peut par exemple fonctionner de la façon suivante. L'axe de pédalier 2 et le deuxième moteur 50 entrainent le porte-satellite 6, l'entrainement entre l'axe de pédalier 2 et le porte-satellite 6 passant par la courroie crantée 21. Le porte-satellite 6 est l'élément d'entrée du train épicycloïdal. Le premier moteur 40 entraine le planétaire 5. La porte-satellite 6 et le planétaire 5 entrainent la couronne 9, qui est l'élément de sortie du train épicycloïdal. La couronne 9 entraine le deuxième plateau de sortie 26, qui est lui-même engrené sur la chaine de transmission (transmettant la puissance à la roue arrière du véhicule). La vitesse de rotation du deuxième plateau de sortie 26 sera égale à une somme pondérée de la vitesse de rotation du porte-satellite 6 et de la vitesse de rotation du planétaire 5. En augmentant la vitesse de rotation du planétaire 5, il est donc possible d'augmenter la vitesse du deuxième plateau de sortie 26, en gardant une vitesse de rotation constante au niveau de l'axe de pédalier 2. Il s'agit donc d'une transmission continuellement variable (CVT).

La couronne 9 est de préférence montée sur un arbre creux 27, qui est lui-même monté sur roulement autour de l'axe de rotation 31. L'arbre creux 27 traverse la paroi latérale du carter 19, de façon à ce que le deuxième plateau de sortie 26, qui est fixé à la couronne 9, soit situé hors du carter 19.

La première roue libre 16 empêche le premier plateau de sortie 4 de tourner moins vite que l'axe de pédalier 2 quand l'axe de pédalier 2 tourne dans le sens normal de pédalage. Un but de cette roue libre 16 est que rapport de vitesse du groupe motopropulseur ne puisse être inférieur à 1. Cet emplacement de la première roue libre 16 permet, en cas de couple de pédalage important, d'éviter un couple élevé dans le reste de la transmission. Ainsi, certaines parties du groupe motopropulseur ne subissent pas ce couple élevé. C'est particulièrement intéressant de préserver notamment de cette façon le train épicycloïdal et le système de transmission entre l'axe de pédalier 2 et le premier élément d'entrée du train épicycloïdal lorsqu'il comprend un élément de transmission déformable comme une courroie 21. En effet, les courroies crantées ne supportent pas de couples élevés.

La première roue libre 16 est agencée pour permettre une transmission de puissance mécanique directe depuis l'axe de pédalier 2 vers le premier plateau de sortie 4. La première roue libre 16 est disposée, préférentiellement directement, entre l'axe de pédalier 2 et le premier plateau de sortie 4. En position bloquée, l'axe de pédalier 2 entraine directement le premier plateau de sortie 4. En position libre, le premier plateau de sortie 4 peut tourner plus vite que l'axe de pédalier 2.

En outre, la première roue libre permet que, sous certaines conditions, l'axe de pédalier 2 entraine directement le premier plateau de sortie 4, qui lui-même entraine la chaine ou courroie de transmission de sortie qui entraine la roue arrière. Toute la puissance du pédalage est alors directement transmise à la chaine de transmission ou courroie de sortie via le premier plateau de sortie 4. Le reste du système de transmission, dont le train épicycloïdal, n'est donc pas chargé, ce qui permet un haut rendement mécanique. Cela se produit par exemple si le système électrique du groupe motopropulseur est mis hors tension ou si l'assistance est désactivée et que le plus petit rapport de vitesse du groupe motopropulseur est sélectionné.

Le premier plateau de sortie 4 peut également transmettre une partie de la puissance si le couple instantané sur le pédalier dépasse un certain seuil et que le premier moteur 40 sature à son couple maximal. Pendant la durée de cette poussée sur la pédale, la valeur instantanée du rapport de vitesse du groupe motopropulseur diminue, et par exemple si le rapport de vitesse programmé est faible, il se peut que la première roue libre 16 se mette en action et entraine le premier plateau de sortie 4 qui transmet alors le couple excédentaire du cycliste à la chaine ou courroie de transmission de sortie. Lorsque cela se produit, ce qui peut arriver lorsque l'assistance est activée, la chaine ou courroie de transmission de sortie reçoit de la puissance d'une part via le train épicycloïdal et le deuxième plateau de sortie 26 et d'autre part via le premier plateau de sortie 4. La présence du premier plateau de sortie 4 et de la première roue libre 16 empêche ainsi le rapport de vitesse du groupe motopropulseur d'être inférieure à 1 et donc empêche la transmission de glisser, ce qui est néfaste pour l'agrément de conduite.

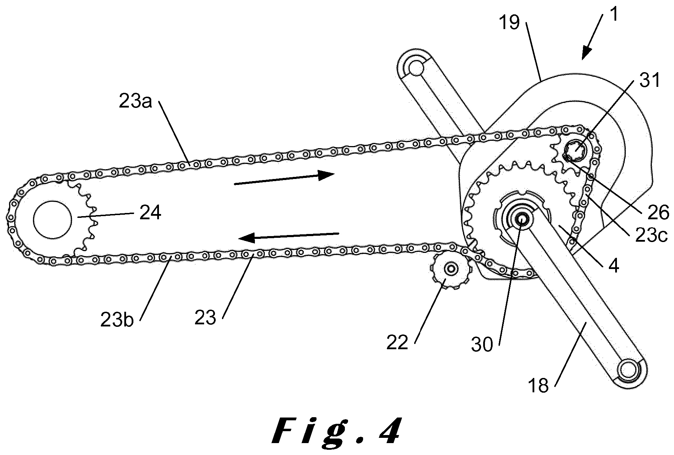

La figure 4 illustre une vue latérale du groupe motopropulseur selon un mode de réalisation de l'invention et de la transmission vers une roue arrière du véhicule à pédale. Cela peut par exemple être le groupe motopropulseur selon le deuxième mode de réalisation de l'invention.

La figure 4 illustre un groupe motopropulseur 1, une chaine de transmission de sortie 23, un pignon 24 de roue arrière et un galet tendeur 22. La chaine de transmission de sortie 23 comprend un brin supérieur 23a, un brin inférieur 23b et un brin intermédiaire 23c. Le brin intermédiaire 23c est la partie de la chaine de transmission de sortie 23 se trouve entre le deuxième plateau de sortie 26 et le premier plateau de sortie 4.

Le rôle du galet tendeur 22 est de reprendre le mou de la chaine ou courroie de transmission de sortie 23 quand la transmission est mise sous charge. Il permet que le brin intermédiaire 23c reste tendu. Ce galet tendeur 22 peut être intégré au groupe motopropulseur 1 ou être fixé sur le cadre du véhicule à pédales. Il est placé de façon à être en contact avec le brin inférieur 23b. Il est également possible d'envisager un fonctionnement fixe sans galet tendeur 22.

Dans le mode de fonctionnement assisté normal du groupe motopropulseur 1 selon le deuxième mode de réalisation, c'est le deuxième plateau de sortie 26 qui transmet la puissance à la ou aux roue(s) du véhicule. Le deuxième plateau de sortie 26 entraine la chaine ou courroie de transmission de sortie 23. Le premier plateau de sortie 4, étant engrené sur la même chaine de transmission 23 que le deuxième plateau de sortie 26, tourne à vide à une vitesse plus élevée que l'axe de pédalier 2. Le premier plateau de sortie 4 est désolidarisé de l'axe de pédalier 2 par l'intermédiaire de la première roue libre 16. Un premier rôle du premier plateau de sortie 4 est de guider la chaine de transmission 23 autour de l'axe du pédalier 2, augmentant ainsi l'écart entre le brin de chaine supérieur 23a et le brin de chaine inférieur 23b. De cette manière, il y a suffisamment de place pour le passage de la base arrière droite du cadre dans le cas où le système de propulsion est installé sur un cadre de vélo. Cette base arrière droite est un tube du cadre reliant le point de fixation de la roue arrière à une patte de fixation du groupe motopropulseur. Elle n'est pas représentée à la figure 4.

Dans certains modes de fonctionnement particuliers, la première roue libre 16 se bloque et empêche le premier plateau de sortie 4 de tourner moins vite que l'axe du pédalier 2. Dans ce cas, le premier plateau de sortie 4 entraine, en tout ou en partie, la chaine de transmission de sortie 23, et donc également le deuxième plateau de sortie 26. Si le système électrique est mis hors-tension et/ou si l'assistance est désactivée et que le plus petit rapport de vitesse du groupe motopropulseur 1 est sélectionné (soit par l'utilisateur soit par le système de contrôle), toute la puissance du cycliste est alors transmise à la chaine de transmission 23 via le premier plateau de sortie 4. Le reste de la transmission n'est donc pas chargé et la transmission est à haut rendement mécanique.

Le premier plateau de sortie 4 peut également transmettre une partie de la puissance si le couple instantané du cycliste dépasse un certain seuil et que le premier moteur 40 sature à son couple maximal. Pendant la durée de cette poussée sur la pédale, la valeur instantanée du rapport de vitesse du groupe motopropulseur va diminuer, et si le rapport de vitesse programmé est faible, il se peut que la première roue libre 16 se mette en action et entraine le premier plateau de sortie 4 qui transmettra le couple excédentaire du cycliste à la chaine de transmission 23. L'interaction du premier plateau de sortie 4 et de la première roue libre 16 empêche le rapport de vitesse du groupe motopropulseur d'atteindre une valeur inférieure à 1.

En d'autres termes, l'invention se rapporte à un groupe motopropulseur 1 de véhicule à pédales. Le groupe motopropulseur 1 comprend un axe de pédalier 2 et un premier plateau de sortie 4 ayant un premier axe de rotation 30. Le premier plateau de sortie 4 est couplé avec une chaine ou courroie de transmission 23 de façon à entrainer la roue arrière du véhicule à pédales. Le couplage entre l'axe de pédalier 2 et la chaine ou courroie de transmission 23 passe par un train épicycloïdal tournant autour d'un deuxième axe de rotation 31. L'axe de pédalier 2 est en outre couplé au premier plateau de sortie 4 par une première roue libre 16 agencée pour empêcher le premier plateau de sortie 4 de tourner moins vite que l'axe de pédalier 2 lorsque l'axe de pédalier 2 tourne dans le sens normal de pédalage.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Groupe motopropulseur (1) pour un véhicule à pédales et comprenant:
• un axe de pédalier (2) agencé de façon à tourner autour d'un premier axe de rotation (30),
• un premier plateau de sortie (4) engrené sur une chaine ou courroie de transmission de sortie (23) et agencé de façon à tourner autour du premier axe de rotation (30),
• un train épicycloïdal comprenant un élément d'entrée, un élément de sortie et un planétaire (5),
• un premier moteur (40),
• un deuxième moteur (50),
• une première roue libre (16), et
• un dispositif de réduction entre l'élément de sortie du train épicycloïdal et le premier plateau de sortie (4),
l'axe de pédalier (2) étant relié au train épicycloïdal via l'élément d'entrée de façon à former une première entrée du train épicycloïdal,
le premier moteur (40) étant relié au train épicycloïdal via le planétaire (5) de façon à former une deuxième entrée du train épicycloïdal,
l'élément d'entrée, l'élément de sortie et le planétaire (5) étant agencés pour tourner autour d'un deuxième axe de rotation (31) différent du premier axe de rotation (30),
**caractérisé en ce que**
• le deuxième moteur (50) est relié à l'élément de sortie du train épicycloïdal de façon à l'entrainer selon un rapport fixe, et
• la première roue libre (16) est agencée pour empêcher le premier plateau de sortie (4) de tourner moins vite que l'axe de pédalier (2) lorsque l'axe de pédalier (2) tourne dans le sens normal de pédalage.

2. Groupe motopropulseur selon la revendication 1, agencé de façon à satisfaire à l'inégalité suivante : $\frac{R . {R}_{out}}{{R}_{c}} - \left(R+1\right) < 0$ où :
• R est la raison du train épicycloïdal,
• *Rₒᵤₜ* est le rapport de réduction entre l'élément de sortie et le premier plateau de sortie (4), et
• *R_{C}* est le rapport de démultiplication entre l'axe de pédalier (2) et l'élément d'entrée.

3. Groupe motopropulseur selon l'une quelconque des revendications précédentes, dans lequel au moins un des deux moteurs (40 ; 50) est un moteur à aimants permanents intérieurs.

4. Groupe motopropulseur selon l'une quelconque des revendications précédentes, comprenant un système démultiplication de vitesse entre l'axe de pédalier (2) et l'élément d'entrée du train épicycloïdal, de manière à ce que l'élément d'entrée tourne plus vite que l'axe de pédalier (2).

5. Groupe motopropulseur selon la revendication précédente, dans lequel le système de démultiplication de vitesse comprend un élément de transmission déformable, par exemple une courroie de démultiplication (21), qui est de préférence crantée.

6. Groupe motopropulseur selon l'une quelconque des revendications précédentes, dans lequel le dispositif de réduction entre l'élément de sortie du train épicycloïdal et le premier plateau de sortie (4) comprend un deuxième plateau de sortie (26) engrené sur la chaine ou courroie de transmission de sortie (23).

7. Groupe motopropulseur selon la revendication précédente, dans lequel le deuxième plateau de sortie (26) est solidaire de l'élément de sortie du train épicycloïdal.

8. Groupe motopropulseur selon la revendication 6 ou 7, dans lequel le deuxième plateau de sortie (26) est d'un diamètre inférieur à celui du premier plateau de sortie (4).

9. Groupe motopropulseur selon l'une quelconque des revendications précédentes, comprenant en outre une deuxième roue libre (17) placée entre l'axe de pédalier (2) et l'élément d'entrée du train épicycloïdal de manière à ce que l'axe de pédalier (2) entraine l'élément d'entrée quand l'axe de pédalier (2) tourne dans le sens normal de pédalage et de manière à empêcher que l'axe de pédalier(2) entraine l'élément d'entrée quand le l'axe de pédalier (2) tourne dans un sens inverse au sens normal de pédalage.

10. Groupe motopropulseur selon l'une quelconque des revendications précédentes, dans lequel le train épicycloïdal comprend une couronne (9) et un porte-satellite (6) ; et dans lequel
• l'élément d'entrée est la couronne (9) et l'élément de sortie est le porte-satellite (6) ; ou
• l'élément d'entrée est le porte-satellite (6) et l'élément de sortie est la couronne (9).

11. Groupe motopropulseur selon l'une quelconque des revendications précédentes, dans lequel le premier moteur (40) est agencé pour être contrôlé en vitesse ou en position et le deuxième moteur (50) est agencé pour être contrôlé en couple ou en courant.

12. Groupe motopropulseur selon l'une quelconque des revendications précédentes, dans lequel le premier moteur (40) est agencé pour être contrôlé en vitesse ou en position grâce à une consigne de vitesse qui est déterminée sur base :
• d'une vitesse mesurée de l'élément d'entrée du train épicycloïdal et d'un paramètre (GC) de rapport de vitesse du groupe motopropulseur ; et/ou
• d'une vitesse de l'élément d'entrée du train épicycloïdal déterminée sur base d'une vitesse mesurée du premier moteur (40) et d'une vitesse mesurée du deuxième moteur (50).

13. Groupe motopropulseur selon l'une quelconque des revendications précédentes, dans lequel le deuxième moteur (50) est agencé pour être contrôlé en en couple ou en courant grâce à une consigne de couple qui :
• est déterminée sur base d'au moins un couple ou d'un courant mesuré sur le premier moteur (40) et d'un paramètre (AR) de niveau d'assistance ; et/ou
• est proportionnelle au résultat d'un filtrage et/ou d'un décalage temporel d'un courant mesuré sur le premier moteur (40).

14. Groupe motopropulseur selon l'une quelconque des revendications précédentes, agencé pour qu'au moins un des premier (40) et deuxième (50) moteurs puisse fonctionner sans que l'axe de pédalier (2) ne soit actionné.

15. Groupe motopropulseur selon l'une quelconque des revendications précédentes, agencé pour qu'au moins des deux moteurs puisse fonctionner en générateur en étant entrainé par la chaine ou courroie de transmission de sortie (23) via le premier plateau de sortie (4) et le train épicycloïdal.

16. Véhicule à pédales comprenant un groupe motopropulseur (1) selon l'une quelconque des revendications précédentes et une chaine ou courroie de transmission de sortie (23).

## Patentansprüche

1. Antriebsstrang (1) für ein Tretfahrzeug und umfassend:
- eine Tretlagerachse (2), angeordnet auf eine Weise, um sich um eine erste Drehachse (30) herum zu drehen,
- eine erste Ausgangsscheibe (4), das in eine(n) Ausgangsübertragungskette oder - riemen (23) eingreift, und auf eine Weise angeordnet ist, um sich um die erste Drehachse (30) herum zu drehen,
- ein Umlaufwellengetriebe, umfassend ein Eingangselement, ein Ausgangselement und ein Sonnenrad (5),
- einen ersten Motor (40),
- einen zweiten Motor (50),
- einen ersten Freilauf (16), und
- eine Untersetzungsvorrichtung zwischen dem Ausgangselement des Umlaufwellengetriebes und der ersten Ausgangsscheibe (4),
wobei die Tretlagerachse (2) mittels des Eingangselements mit dem Umlaufwellengetriebe auf eine Weise verbunden ist, um einen ersten Eingang des Umlaufwellengetriebes zu bilden,
wobei der erste Motor (40) mit dem Umlaufwellengetriebe mittels des Sonnenrads (5) auf eine Weise verbunden ist, um einen zweiten Eingang des Umlaufwellengetriebes zu bilden,
wobei das Eingangselement, das Ausgangselement und das Sonnenrad (5) auf eine Weise angeordnet sind, um sich um eine zweite Drehachse (31) herum zu drehen, die sich von der ersten Drehachse (30) unterscheidet,
**dadurch gekennzeichnet, dass**
- der zweite Motor (50) mit dem Ausgangselement des Umlaufwellengetriebesauf eine Weise verbunden ist, um es mit einer festen Übersetzung anzutreiben, und
- der erste Freilauf (16) angeordnet ist, um die erste Ausgangsscheibe (4) daran zu hindern, sich weniger schnell zu drehen als die Tretlagerachse (2), wenn die Tretlagerachse (2) sich in der normalen Tretrichtung dreht.

2. Antriebsstrang nach Anspruch 1, der angeordnet ist, um die folgende Ungleichheit zu erfüllen: $\frac{R . {R}_{out}}{{R}_{c}} - \left(R+1\right) < 0$ wobei:
- *R* das Drehzahlverhältnis des Umlaufwellengetriebes ist,
- *Rₒᵤₜ* das Untersetzungsverhältnis zwischen dem Ausgangselement und der ersten Ausgangsscheibe (4) ist, und
- *R_{C}* das Übersetzungsverhältnis zwischen der Tretlagerachse (2) und dem Eingangselement ist.

3. Antriebsstrang nach einem der vorstehenden Ansprüche, wobei mindestens einer der beiden Motoren (40; 50) ein Motor mit innenliegenden Permanentmagneten ist.

4. Antriebsstrang nach einem der vorstehenden Ansprüche, umfassend ein Drehzahlübersetzungssystem zwischen der Tretlagerachse (2) und dem Eingangselement des Umlaufwellengetriebes, sodass sich das Eingangselement schneller dreht als die Tretlagerachse (2).

5. Antriebsstrang nach dem vorstehenden Anspruch, wobei das Drehzahlübersetzungssystem ein verformbares Übertragungselement, beispielsweise einen Übersetzungsriemen (21) umfasst, der vorzugsweise verzahnt ist.

6. Antriebsstrang nach einem der vorstehenden Ansprüche, wobei die Untersetzungsvorrichtung zwischen dem Ausgangselement des Umlaufwellengetriebesund der ersten Ausgangsscheibe (4) eine zweite Ausgangsscheibe (26) umfasst, das in eine(n) Ausgangsübertragungskette oder -riemen (23) eingreift.

7. Antriebsstrang nach dem vorstehenden Anspruch, wobei die zweite Ausgangsscheibe (26) fest mit dem Ausgangselement des Umlaufwellengetriebes verbunden ist.

8. Antriebsstrang nach Anspruch 6 oder 7, wobei die zweite Ausgangsscheibe (26) von einem geringeren Durchmesser als jenem des Ausgangsscheibe (4) ist.

9. Antriebsstrang nach einem der vorstehenden Ansprüche, weiter umfassend einen zweiten Freilauf (17), der zwischen der Tretlagerachse (2) und dem Eingangselement des Umlaufwellengetriebes platziert ist, sodass die Tretlagerachse (2) das Eingangselement antreibt, wenn sich die Tretlagerachse (2) in die normale Tretrichtung dreht, und um zu verhindern, dass die Tretlagerachse (2) das Eingangselement antreibt, wenn sich die Tretlagerachse (2) in eine zur normalen Tretrichtung umgekehrte Richtung dreht.

10. Antriebsstrang nach einem der vorstehenden Ansprüche, wobei das Umlaufwellengetriebe einen Kranz (9) und einen Satellitenträger (6) umfasst; und wobei
- das Eingangselement der Kranz (9) ist und das Ausgangselement der Satellitenträger (6) ist; oder
- das Eingangselement der Satellitenträger (6) ist und das Ausgangselement der Kranz (9) ist.

11. Antriebsstrang nach einem der vorstehenden Ansprüche, wobei der erste Motor (40) angeordnet ist, um durch Drehzahl oder Position gesteuert zu werden, und der zweite Motor (50) angeordnet ist, um durch Drehmoment oder Strom gesteuert zu werden.

12. Antriebsstrang nach einem der vorstehenden Ansprüche, wobei der erste Motor (40) angeordnet ist, um dank eines Drehzahlsollwerts durch Drehzahl oder Position gesteuert zu werden, die bestimmt wird basierend auf:
- einer gemessenen Drehzahl des Eingangselements des Umlaufwellengetriebes und einem Parameter (GC) eines Drehzahlverhältnisses des Antriebsstrangs; und/oder
- einer Drehzahl des Eingangselements des Umlaufwellengetriebes, die basierend auf einer gemessenen Drehzahl des ersten Motors (40) und einer gemessenen Drehzahl des zweiten Motors (50) bestimmt wird.

13. Antriebsstrang nach einem der vorstehenden Ansprüche, wobei der zweite Motor (50) angeordnet ist, um dank eines Drehmomentsollwerts durch Drehmoment oder Strom gesteuert zu werden, der:
- basierend auf mindestens einem am ersten Motor (40) gemessenen Drehmoment oder Strom und einem Parameter (AR) einer Unterstützungsstufe bestimmt wird; und/oder
- proportional zu einer Filterung und/oder einer zeitlichen Verzögerung eines am ersten Motor (40) gemessenen Stroms ist.

14. Antriebsstrang nach einem der vorstehenden Ansprüche, der angeordnet ist, damit mindestens einer von dem ersten (40) und zweiten (50) Motor funktionieren kann, ohne dass die Tretlagerachse (2) betätigt wird.

15. Antriebsstrang nach einem der vorstehenden Ansprüche, der angeordnet ist, damit mindestens der Motoren als Generator funktionieren kann, indem er durch die Ausgangsübertragungskette oder -riemen (23) über die erste Ausgangsscheibe (4) und das Umlaufwellengetriebe angetrieben wird.

16. Tretfahrzeug, umfassend einen Antriebsstrang (1) nach einem der vorstehenden Ansprüche und eine(n) Ausgangsübertragungskette oder -riemen (23).

## Claims

1. A power train (1) for a pedal vehicle and comprising:
• a crankset axle (2) arranged to rotate about a first axis of rotation (30),
• a first output plate (4) meshed on an output transmission chain or belt (23) and arranged to rotate about the first axis of rotation (30),
• a planetary gear train comprising an input element, an output element and a sun gear (5),
• a first motor (40),
• a second motor (50),
• a first free wheel (16), and
• a reduction device between the output element of the planetary gear train and the first output plate (4),
the crankset axle (2) being connected to the planetary gear train via the input element so as to form a first input of the planetary gear train,
the first motor (40) being connected to the planetary gear train via the sun gear (5) so as to form a second input of the planetary gear train,
the input element, the output element and the sun gear (5) are arranged to rotate about a second axis of rotation (31) different from the first axis of rotation (30),
**characterized in that**
• the second motor (50) is connected to the output element of the planetary gear train so as to drive it in a fixed ratio, and
• the first free wheel (16) is arranged to prevent the first output plate (4) from rotating slower than the crankset axle (2) when the crankset axle (2) rotates in the normal pedalling direction.

2. The power train according to claim 1, arranged so as to satisfy the following inequality: $\frac{R . {R}_{out}}{{R}_{c}} - \left(R+1\right) < 0$ where:
• *R* is the ratio of the planetary gear train,
• *Rₒᵤₜ* is the reduction ratio between the output element and the first output plate (4), and
• *R_{c}* is the gear ratio between the crankset axle (2) and the input element.

3. The power train according to any one of the preceding claims, wherein at least one of the two motors (40; 50) is an inner permanent magnet motor.

4. The power train according to any one of the preceding claims, comprising a gearing down system between the crankset axle (2) and the input element of the planetary gear train, so that the input element rotates faster than the crankset axle (2).

5. The power train according to the preceding claim, wherein the gearing down system comprises a deformable transmission element, for example a gearing down belt (21), which is preferably notched.

6. The power train according to any one of the preceding claims, wherein the reduction device between the output element of the planetary gear train and the first output plate (4) comprises a second output plate (26) meshed with the output transmission chain or belt (23).

7. The power train according to the preceding claim, wherein the second output plate (26) is integral with the output element of the planetary gear train.

8. The power train according to claim 6 or 7, wherein the second output plate (26) has a smaller diameter than the one of the first output plate (4).

9. The power train according to any one of the preceding claims, further comprising a second free wheel (17) arranged between the crankset axle (2) and the input element of the planetary gear train so that the crankset axle (2) drives the input element when the crankset axle (2) rotates in the normal pedalling direction and so as to prevent the crankset axle (2) from driving the input element when the crankset axle (2) rotates in a direction opposite to the normal pedalling direction.

10. The power train according to any one of the preceding claims, wherein planetary gear train comprises a ring gear (9) and a planet carrier (6); and wherein
• the input element is the ring gear (9) and the output element is the planet carrier (6); or
• the input element is the planet carrier (6) and the output element is the ring gear (9).

11. The power train according to any one of the preceding claims, wherein the first motor (40) is arranged to be controlled in speed or position and the second motor (50) is arranged to be controlled in torque or current.

12. The power train according to any one of the preceding claims, wherein the first motor (40) is arranged to be controlled in speed or position by a speed setpoint which is determined on the basis of
• a measured speed of the input element of the planetary gear train and a Gear Coefficient parameter (GC) of the power train; and/or
• a speed of the input element of the planetary gear train determined on the basis of a measured speed of the first motor (40) and a measured speed of the second motor (50).

13. The power train according to any one of the preceding claims, wherein the second motor (50) is arranged to be controlled in torque or current by a torque setpoint that
• is determined on the basis of at least a torque or current measured on the first motor (40) and an assistance ratio parameter (AR); and/or
• is proportional to the result of filtering and/or time shifting of a current measured on the first motor (40).

14. The power train according to any one of the preceding claims, arranged so that at least one of the first (40) and second (50) motors can operate without the crankset axle (2) being actuated.

15. The power train according to any one of the preceding claims, arranged so that at least of the two motors can operate as a generator by being driven by the output transmission chain or belt (23) via the first output plate (4) and the planetary gear train.

16. A pedal vehicle comprising a power train (1) according to any one of the preceding claims and an output transmission chain or belt (23).
